# EUROPÄISCHE PATENTSCHRIFT

(11) **EP 3 420 253 B1**
(45) Veröffentlichungstag und Bekanntmachung des Hinweises auf die Patenterteilung: **19.02.2020**
(21) Anmeldenummer: 16797926.9
(22) Anmeldetag: 17.11.2016
(51) Int. Cl.: F16J 15/00, F16J 15/10

(54) **MOTORKOMPONENTE MIT EINER DICHTUNG**
ENGINE COMPONENT COMPRISING A SEAL
COMPOSANT DE MOTEUR POURVU D'UN SYSTÈME D'ÉTANCHÉITÉ

(30) Priorität: 22.02.2016 DE 102016103030
(43) Veröffentlichungstag der Anmeldung: 02.01.2019
(73) Patentinhaber: Federal-Mogul Sealing Systems GmbH, 57562 Herdorf (DE)
(72) Erfinder: GASCH, Martin, 40723 Hilden (DE)
(74) Vertreter: Becker & Kurig Partnerschaft Patentanwälte PartmbB
(86) Internationale Anmeldenummer: PCT/EP2016/078062
(87) Internationale Veröffentlichungsnummer: WO 2017/144129

(56) Entgegenhaltungen:
- EP-A1- 2 090 816
- DE-A1-102007 040 101
- DE-A1-102012 216 531
- JP-A- 2010 169 102
- US-A1- 2008 226 862

## Beschreibung

Die vorliegende Erfindung betrifft eine Dichtung für eine Motorkomponente wie eine Zylinderkopfhaube. Insbesondere betrifft die vorliegende Erfindung eine Motorkomponente mit zwei verschiedenen abzudichtenden Durchführungen für zwei verschiedene Medien. Spezieller betrifft die vorliegende Erfindung eine Zylinderkopfhaube mit integriertem Teil- und Voll-Lastabscheider zur Be- bzw. Entlüftung des Kurbelgehäuses bzw. von Blowby-Gasen, die in das Kurbelgehäuse gelangt sind.

Zylinderkopfhauben mit Teil- und Volllastabscheidern sind beispielsweise aus der deutschen Patentanmeldung DE 10 2012 216 531 A1 bekannt. Dieses Dokument offenbart jedoch keinerlei spezielle Dichtungsgeometrie für eine derartige Ausführung eines Zylinderkopfdeckels

JP 2010-169102 offenbart eine Motorkomponente gemäß dem Oberbegriff des Anspruchs 1.

Es besteht daher ein Bedarf, eine Dichtung für eine Motorkomponente wie eine Zylinderkopfhaube bereitzustellen, die für den Einsatz insbesondere mit einem Teil- und Volllastabscheider optimiert ist.

Diese Aufgabe wird erfüllt durch einen Gegenstand mit den Merkmalen des Anspruchs 1. Bevorzugte Ausführungsformen sind in den abhängigen Ansprüchen definiert.

Die Dichtung bzw. das Dichtsystem für eine Motorkomponente umfasst mindestens eine erste Dichtung aus AEM Ethylen-Acrylat Kautschuk oder Polyacrylat-Kautschuk (im Folgenden AEM) und mindestens eine zweite Dichtung aus Fluorkautschuk (im Folgenden FKM nach DIN ISO 1629 oder FPM).

Die Dichtung bzw. das Dichtsystem umfasst dabei zwei verschiedene Dichtungen aus zwei verschiedenen Materialien, um mindestens zwei verschiedene Durchgänge zweier verschiedener Medien zu ermöglichen. AEM ist üblicherweise ein preisgünstiges Material, das eine geringere Beständigkeit gegenüber bestimmten Medien aufweist (wie sie in Blowby-Gasen zu finden sind). FKM hingegen ist ein Material, das eine größere Beständigkeit gegenüber bestimmten Medien zeigt.

Das Dichtungssystem kann dabei so ausgelegt sein, dass die beiden Dichtungen direkt nebeneinander verlaufen.

Wenn die Dichtungen direkt nebeneinander verlaufen, ist es ebenfalls vorgesehen, dass die erste und die zweite Dichtung jeweils eine Formgebung aufweisen, die ein direktes Aneinanderliegen bzw. ein Ineinandergreifen der aneinanderliegenden Oberflächen ermöglicht. Dies stellt einen Formschluss der beiden Dichtungen in der Dichtungsnut zueinander sicher. Durch einen Fomschluss der Dichtungen in der Dichtungsnut ist es möglich, dass die eine Dichtung durch die jeweils andere Dichtung beim Verbau in die Nut zusätzlich gehalten wird. Die AEM-Dichtung kann weicher als die FKM-Dichtung ausgeführt sein. Beide Materialien könnten auch dieselbe Härte aufweisen.

Bei einer weiteren beispielhaften Ausführungsform dient die Dichtung als Zylinderkopfhaubendichtung, wobei die Dichtung Öffnungen für Blowbykanäle und Volllastabscheider sowie Teillastabscheider umfasst, wobei die zweite Dichtung jeweils an den Öffnungen zur Abdichtung der Blowbykanäle und des Volllastabscheiders sowie des Teillastabscheiders vorgesehen ist und die erste Dichtung zur Abdichtung eines Randbereichs des Zylinderkopfdeckels gegenüber einem Zylinderkopf vorgesehen ist. Diese Ausführungsform betrifft somit eine spezielle Motorkomponente, nämlich eine Zylinderkopfhaube, der mit einem Volllastabscheider und einem Teillastabscheider versehen ist, um Blowby-Gase, die sich in dem Kurbelgehäuse sammeln, über den Zylinderkopf abzuführen, wobei das Öl des Ölnebels aus dem Kurbelgehäuse in dem Zylinderkopfdeckel abgeschieden wird, um in den Ölkreislauf zurückgeführt zu werden. Die entölten Blowbygase werden dann üblicherweise über den Ansaugkrümmer in die Brennkammern zurückgeleitet. Die heißeren aggressiveren sowie unter höherem Druck stehenden Blowby-Gase können durch das Material der zweiten Dichtung besser abgedichtet werden als durch das weichere Material der ersten Dichtung.

Bei einer zusätzlichen Ausführungsform ist die erste und/oder die zweite Dichtung mit Halte- und/oder Distanznoppen versehen. Die Halte- und/oder Distanznoppen können dazu dienen, die Dichtung innerhalb des Dichtungsspalts zu fixieren und zu positionieren. Die Distanznoppen können dabei die Dichtungen in einer Richtung quer zum Verlauf der Dichtnut positionieren. Die Haltenoppen können so ausgeführt sein, dass eine Kraft quer zur Haltenut aufgebaut wird, durch die die erste und die zweite Dichtung durch Reibschluss in der Dichtnut gehalten wird.

Gemäß einer weiteren Ausführungsform weist die erste und/oder die zweite Dichtung eine Form auf, durch die ein fehlerhafter Einbau verhindert wird. Die erste und/oder die zweite Dichtung ist mit jeweils mindestens einem sogenannten Poka-Yoke-Feature bzw. Falsch-Einbaumerkmal versehen, das verhindern soll, dass ein Arbeiter eine fehlmontierte Dichtung annimmt, eine Dichtung fehlerhaft montiert oder eine fehlerhaft montierte Dichtung weitergibt. Es ist ebenfalls möglich, die erste und insbesondere die zweite Dichtung so zu gestalten, dass eine Fehlmontage unmöglich wird, sofern die Dichtung spiegelsymmetrisch und rotationssymmetrisch ausgeführt wird. Weiterhin ist es möglich, den gesamten Fertigungsprozess so stark zu automatisieren, dass auch ohne Poka-Yoke-Feature Fehlmontagen weitgehend ausgeschlossen werden können.

Bei einer weiteren Ausführungsform ist die erste Dichtung als I-Dichtung ausgeführt und die zweite Dichtung ist ebenfalls als I-Dichtung ausgeführt, wobei die erste Dichtung im Querschnitt mindestens eine Hinterschneidung aufweist und die zweite Dichtung im Querschnitt mindestens einen Vorsprung aufweist, wobei der mindestens eine Vorsprung zumindest teilweise mit der mindestens einen Hinterschneidung in Eingriff steht. Diese Ausführung ist darauf gerichtet, dass die weichere erste Dichtung die härtere zweite Dichtung in der Dichtnut hält und fixiert. Es ist ohne weiteres möglich, einen einzelnen Vorsprung in die erste Dichtung zu integrieren, der sich seitlich in Richtung der Nutflanken erstreckt, ohne dass dafür ein kompliziertes Gusswerkzeug hergestellt werden müsste. Das Gusswerkzeug für die zweite Dichtung kann dabei ohne Hinterschneidungen ausgeführt sein, sodass sich die zweite Dichtung immer leicht aus der Form lösen lässt. Im Gegensatz dazu kann das weichere Material der ersten Dichtung auch aus einer Form mit Hinterschneidungen unter Verformung herausgezogen werden, da es elastisch genug ist, um sich hinreichend zu verformen, um sich selbst bei einem Formschluss aus der Form lösen zu können.

Bei einer weiteren beispielhaften Ausführungsform verlaufen die erste und/oder die zweite Dichtung zumindest teilweise so dicht nebeneinander, dass sie zumindest teilweise auf einer gemeinsamen Dichtfläche in einer I-Dichtungsnut verlaufen. Bei dieser Ausführungsform werden die erste und die zweite Dichtung nicht wie üblicherweise zu erwarten, in jeweils eigenen Dichtungsnuten untergebracht, sondern liegen zumindest teilweise in einer gemeinsamen Dichtung vor. Dadurch kann die Breite der Trennwand, die die beiden Dichtungen bzw. die beiden Dichtnuten voneinander trennt, eingespart werden. Dieser Effekt betrifft lediglich den Teil der Dichtnuten, in dem die beiden Dichtungen dicht nebeneinander verlaufen. Da davon ausgegangen werden kann, dass dieser Bereich lediglich etwa die halbe Länge der kürzeren Dichtung ausmacht, sollte klar sein, dass die Platz- und Materialersparnis nur einen Teil des Umfangs der Dichtungen betragen wird. Es ist hier so, dass die beiden Dichtungen nicht den gleichen Raum oder den gleichen Durchgang abdichten, da sonst eine der Dichtungen überflüssig wäre, zudem kann eine der Dichtungen nicht so gut abdichten wie die andere, weshalb die schlechtere Dichtung dann völlig überflüssig wäre.

In einer weiteren beispielhaften Ausführungsform der vorliegenden Dichtung umgibt die erste Dichtung die zweite Dichtung vollständig. Diese Ausführung ist insbesondere für Anwendungen vorteilhaft, bei denen die erste Dichtung durch Reibschluss in der Dichtungsnut gehalten wird, und so die zweite Dichtung durch Formschluss mit der ersten Dichtung in der gemeinsamen Dichtungsnut halten kann. Diese Ausführung weist den zusätzlichen Vorteil auf, dass die zweite Dichtung ganz ohne gesonderte Vorrichtungen in der gemeinsamen Dichtungsnut fixiert werden kann, was eine schnelle und vor allem einfache Montage der ersten und zweiten Dichtung in der gemeinsamen Dichtungsnut ermöglicht. Dieser Fall ermöglicht es, vor allem die Toleranzen der Dichtnut sowie der zweiten Dichtung zu erhöhen, da die Elastizität der ersten Dichtung die größeren Toleranzen ausgleichen kann. Dieser Aufbau gestattet es auch die unterschiedlichen Wärmeausdehungs-Koeffizienten des Materials, aus dem die Dichtungsnut gebildet ist und der zweiten Dichtung auszugleichen, was die Belastung der zweiten Dichtung erheblich verringern kann.

In einer zusätzlichen Ausführung weisen die erste und die zweite Dichtung im Wesentlichen einen A- bzw. V-förmigen Querschnitt auf, wobei bevorzugt die A-förmigen Querschnitte so ausgerichtet sind, dass sie mit der Schulter in der I-Dichtnut liegen. Damit sind die beiden Dichtungen parallel und in die gleiche Richtung ausgerichtet in der gemeinsamen Dichtnut angeordnet. Durch die Anordnung liegt die Dichtung mit einer Dichtlippe auf dem Nutgrund auf und jeweils zwei Dichtlippen sind gebildet, um auf einer Dichtfläche eines gegenüberliegenden abzudichtenden Teils aufzuliegen. Hier liegen die Dichtungen parallel und in die gleiche Richtung ausgerichtet in der gemeinsamen Dichtnut. In dieser Ausführung liegen jeweils zwei Dichtlippen pro Dichtungen auf der gegenüberliegenden Dichtfläche auf.

Gemäß der vorliegenden Erfindung wird eine Motorkomponente bereitgestellt, die angepasst ist an einem Motor dichtend angebracht zu werden. Die Motorkomponente ist mit einer der vorstehend beschriebenen Dichtungen versehen. Die Motorkomponente weist für die erste Dichtung und die zweite Dichtung jeweils eine erste und zweite Dichtnut auf, und wobei die erste und die zweite I-Dichtnut zumindest teilweise zusammen verlaufen und eine gemeinsame Dichtnut bilden, in der die erste und die zweite Dichtung nebeneinander verlaufen. Damit kann die Dichtnut der Motorkomponente die vorstehend beschriebene Dichtung aufnehmen.

Bei einer beispielhaften Ausführungsform der vorliegenden Motorkomponente umgibt die die erste Dichtung die zweite Dichtung vollständig, bzw. die gemeinsame Dichtnut für die zweite Dichtung ist vollständig in Form der gemeinsamen Dichtnut ausgeführt. In diesem Fall ist die härtere zweite Dichtung vollständig von der weicheren ersten Dichtung umgeben und wird dadurch von dieser in der Dichtnut gehalten.

Bei einer zusätzlichen Ausführungsform der vorliegenden Erfindung ist die Dichtnut für die zweite Dichtung zumindest teilweise nicht mit einer inneren Nutflanke versehen. Bevorzugt weist die Dichtnut und/oder die gemeinsame Dichtnut überhaupt keine innere Nutflanke auf. Die zweite Dichtung ist aus sehr viel festerem bzw. stabilerem Material gefertigt als die erste Dichtung. Damit kann die zweite Dichtung neben axialen Druckkräften, die durch die Dichtflächen aufgebracht werden, ebenfalls radiale Druckkräfte aufnehmen. Da davon ausgegangen werden kann, dass die Dichtung einen inneren Überdruck abdichten soll bzw. lediglich einem geringen äußeren Überdruck widerstehen muss, kann auf die innere Nutflanke verzichtet werden. Damit kann das Bauteil so ausgeführt werden, dass der Materialbedarf und vor allem der Platzbedarf für die innere Nutflanke an der Motorkomponente eingespart werden kann. Dadurch kann man im Vergleich zu zwei nebeneinanderliegenden getrennten Dichtnuten sowohl die Breite für die Trennwand zwischen den beiden Nuten als auch die Breite der inneren Nutbegrenzung einsparen. Damit stehen den Designern von Motoren und insbesondere von Zylinderköpfen und von Zylinderkopfdeckeln mehr Freiheiten und Möglichkeiten zur Optimierung zur Verfügung.

Bei einer weiteren beispielhaften Ausführungsform der vorliegenden Erfindung ist die erste Dichtung und/oder die zweite Dichtung mit der Motorkomponente verklebt. Dadurch kann einfach sichergestellt werden, dass die Dichtung in Richtung der Dichtnut auf jeden Fall abgedichtet sind. Durch eine Verklebung kann ebenfalls sichergestellt werden, dass sich die erste und/oder die zweite Dichtung nicht aus der Dichtnut lösen können. Eine verklebte Dichtung gestattet es zudem, die Motorkomponente mit der Dichtung vorzumontieren, ohne dass eine Gefahr besteht, dass sich die Dichtung beim Transport, der Lagerung oder bei der Montage aus der Dichtnut löst.

Gemäß eines weiteren Aspekts der vorliegenden Erfindung wird ein Motor mit einer der vorstehend beschriebenen Motorkomponenten bereitgestellt. Ein derartiger Motor ist dadurch gekennzeichnet, dass die Dichtflächen für eine Motorkomponente so dicht zusammenliegen, dass sie mit einer Dichtung zusammenwirken können, die sich in einer gemeinsamen Dichtnut befinden.

Im Folgenden wird die Einfindung anhand von Figuren dargestellt. Sowohl in den Figuren und in der Beschreibung werden gleiche und/oder ähnliche Bezugszeichen für gleiche und/oder Komponenten verwendet.
Figuren 1A und 1B zeigt eine herkömmliche Dichtung für einen Zylinderkopfdeckel.
Figuren 2A und 2B zeigen eine beispielhafte Ausführungsform der vorliegenden Erfindung.
Figuren 3A bis 3C stellen verschiedene Ansichten von erfindungsgemäßen Ausführungen der vorliegenden Erfindung dar.
Figuren 4A bis 7B stellen weitere Ansichten von erfindungsgemäßen Ausführungen der vorliegenden Erfindung dar.

Die Darstellungen sind schematisch und nicht maßstabsgerecht.

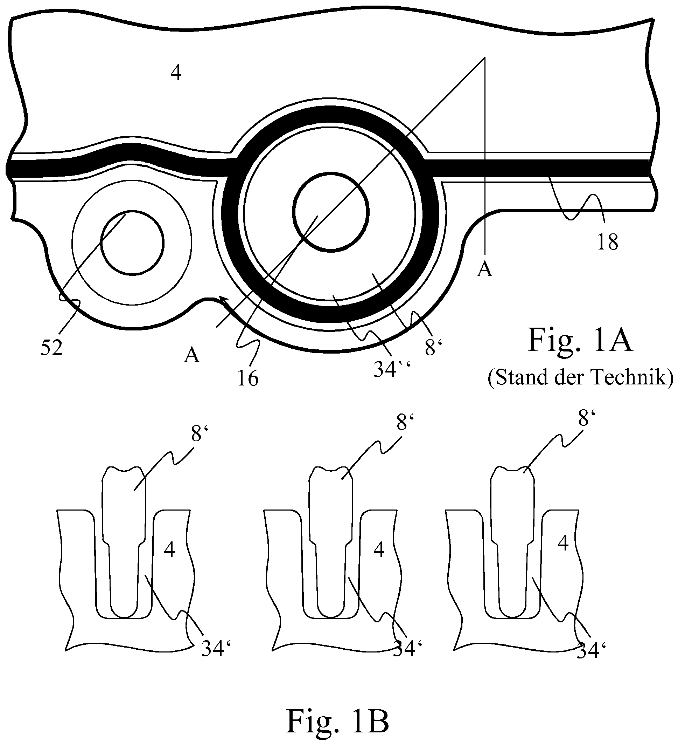

Figuren 1A und 1B zeigen eine herkömmliche Dichtung 2 in einer Motorkomponente 4, hier ein Zylinderkopfdeckel 14, die Öffnungen 16 für Blowbygase, für eine Verbindung zu einem Teillastabscheider (TLA) und/oder einen Vollastabscheider (VLA) umfasst. Der Zylinderkopfdeckel deckt zudem einen Zylinderkopf ab, weshalb eine Dichtung um den Randbereich 18 des Zylinderkopfdeckels verläuft. Hier ist die Dichtung 8' vollständig aus einem teuren und relativ harten Fluorkautschuck (FKM) hergestellt, da die Abdichtung der Öffnungen 16 für die Blowbygase und die TLA und VLA derart hohe Anforderungen an das Dichtmaterial stellen. Die herkömmliche Dichtung umfasst lediglich ein Material, wodurch die Fertigungskosten, nicht jedoch die Materialkosten gering gehalten werden können. Eine Lösung mit nur einer einzelnen Dichtnut erfordert ebenfalls nur einen sehr geringen Platzbedarf in Form einer einzelnen Dichtnut 34' für die FKM-Dichtung. Der Zylinderkopfdeckel 14 bzw. die Motorkomponente 4 kann mit einem Befestigungsmittel wie einer Schraube an einem Zylinderkopf befestigt werden, die sich durch eine Öffnung 52 für ein Befestigungsmittel erstreckt. Die Linie A-A stellt eine Schnittlinie dar entlang der die Motorkomponente 4 für die Darstellungen der Figuren 1B aufgeschnitten ist.

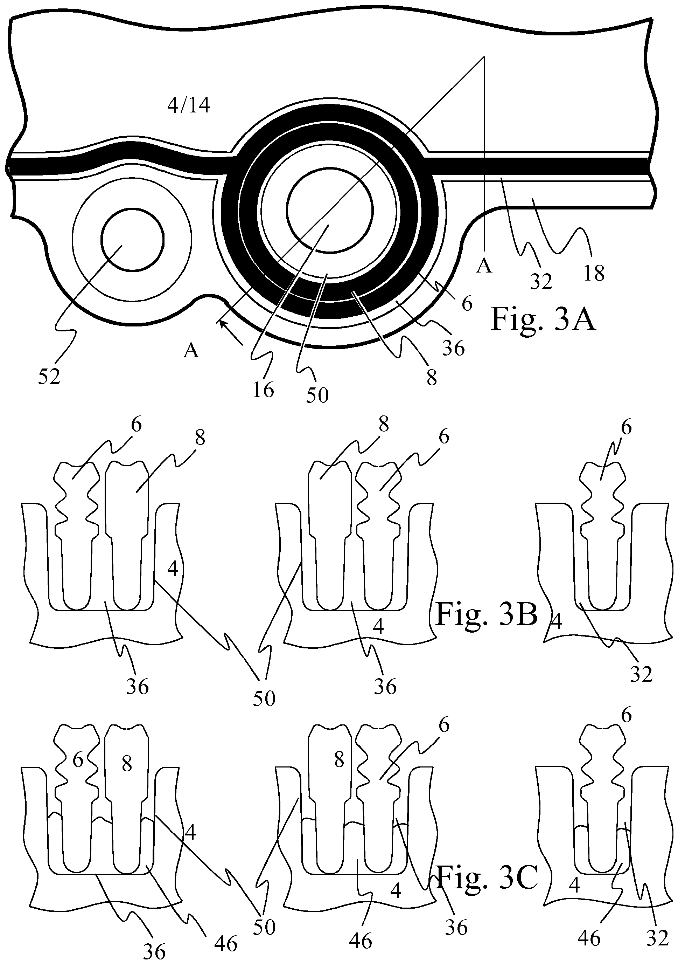

Figur 3B zeigt Schnittansichten der Dichtnut 34' entlang der Schnittlinie A-A von Figur 1A. Da hier immer die gleiche Dichtgeometrie und Dichtungsart verwendet wird, zeigen alle drei Schnitte auch immer die gleichen Querschnitte. Die Querschnitte zeigen die FKM-Dichtung 8' ausgeführt als I-Dichtung in einer entsprechenden I-Dichtungsnut 34'

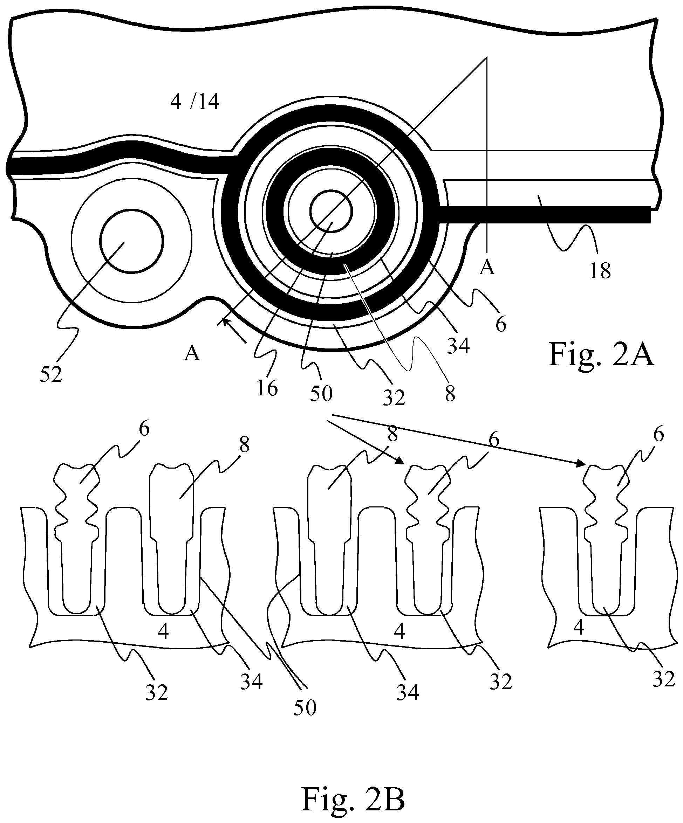

Figuren 2A und 2B zeigen eine beispielhafte Ausführungsform eines erfindungsgemäßen Dichtungssystems. Die teure FKM Dichtung (zweite Dichtung) 8 befindet sich an einer getrennten zweiten Dichtnut 34, die nur für die FKM-Dichtung vorgesehen ist. Die FKM Dichtung 8 dichtet dabei nur die Öffnungen 16 für die Blowbygase (BBG) und die TLA und VLA ab. Dadurch kann sehr viel FKM-Material eingespart werden. Der Randbereich 18 der Motorkomponente 4 (auch hier ein Zylinderkopf 14) wird von einer Dichtung aus Ethylen-Acrylat Kautschuk oder Polyacrylat-Kautschuk (AEM) d.h. ersten Dichtung abgedichtet. AEM ist weicher als FKM, wodurch der erforderliche Anpressdruck und damit auch die Anforderungen an die Starrheit der Motorkomponente 4 und die Festigkeit der Befestigungsmittel deutlich verringert werden kann. Durch die vorgeschlagene Konstruktion kann das Gesamtgewicht des Zylinderkopfdeckels und vor allem die Menge des verwendeten FKM deutlich verringert werden. Diese Konstruktion weist lediglich den Nachteil auf, dass die Größe der Öffnung 16 verringert werden muss, da die Dichtung nach diesem Design einen erhöhten Platzbedarf aufweist, und somit eventuell eine Neukonstruktion des Zylinderkopfs und des Zylinderkopfdeckels erforderlich macht. Hier wurde dies dadurch ausgeglichen, dass die Öffnung 16 verkleinert wurde. Die Linie A-A deutet hier wieder eine Schnittlinie an entlang der die Schnittansichten der Figuren B (und C) geschnitten wurden.

In Figur 2B ist zu erkennen, dass die erste und die zweite Dichtung 6, 8 jeweils in einer ersten Dichtnut 32 bzw. einer zweiten Dichtnut 34 verlaufen, die voneinander getrennt sind. Die zweite (FKM) Dichtung 8 umschließt dabei die Öffnungen 16 für BBG, TLA und VLA. Die erste (AEM) Dichtung dichtet den Rand der Motorkomponente ab.

In der Ausführung der Figur 2 werden zwei getrennte und unterschiedliche Dichtungen verwendet, um zwei getrennte und unterschiedliche Dichtaufgaben zu erfüllen.

Figuren 3A bis 3C stellen eine Weiterentwicklung der Ausführung der Figuren 2A und 2B dar. Bei den Figuren 3A bis 3C wird für die erste Dichtung 6 eine einzelne am Rand verlaufende erste Dichtnut 32 verwendet. Die zweite Dichtung 8 verläuft zusammen mit der ersten Dichtung 6 in einer gemeinsamen Dichtnut 36, in der die erste und die zweite Dichtung nebeneinander und zusammen verlaufen. Die weiteren Merkmale entsprechen dabei der Ausführung von Figur 2A und 2B. Die starrere zweite Dichtung 8 kann die weichere erste 6 abstützen und so die Aufgabe der vorher vorhandenen inneren Nutwand der Nut 32 übernehmen. Die festere zweite FKM Dichtung 8 benötigt aufgrund ihrer Materialeigenschaften keine doppelte Abstützung. Hier lässt sich die erforderliche Breite zum Abdichten der Öffnung 16 für BBG, TLA bzw. VLA gegenüber der Lösung der Figur 2 weiter verringern. In Figur 3C ist dargestellt, dass die Dichtungen 6, 8 über Verklebungen 46 jeweils mit der Dichtnuten 32, 36 verbunden sein können, sodass verhindert werden kann, dass die Dichtungen bei einer Lagerung, einem Transport oder einer Handhabung der Motorkomponenten aus der jeweiligen Dichtnut 32, 36 lösen können. In den Figuren 3A bis 3C umschließt die erste Dichtung 6 die zweite Dichtung 8 jeweils vollständig.

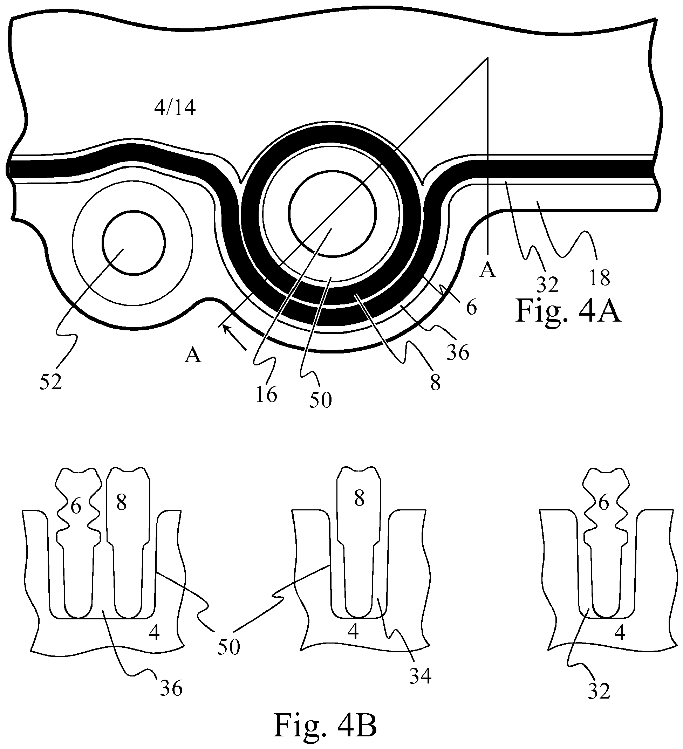

Figuren 4A und 4B zeigen eine Ausführungsform die der Ausführung der Figuren 2A und 2B entspricht. Im Gegensatz zu den Figuren 3A bis 3C umschließt die erste Dichtung 6 die zweite Dichtung 8 nicht vollständig. Die erste Dichtnut 32 und die zweite Dichtnut 34 laufen zusammen und bilden nur auf etwa der halben Länge der zweiten Dichtung 8 eine gemeinsame Dichtnut 36. Durch diesen Aufbau kann die Breite des Dichtsystem vor allem im Hinterland im Vergleich zu der Ausführung der Figuren 3A bis 3C verringert werden.

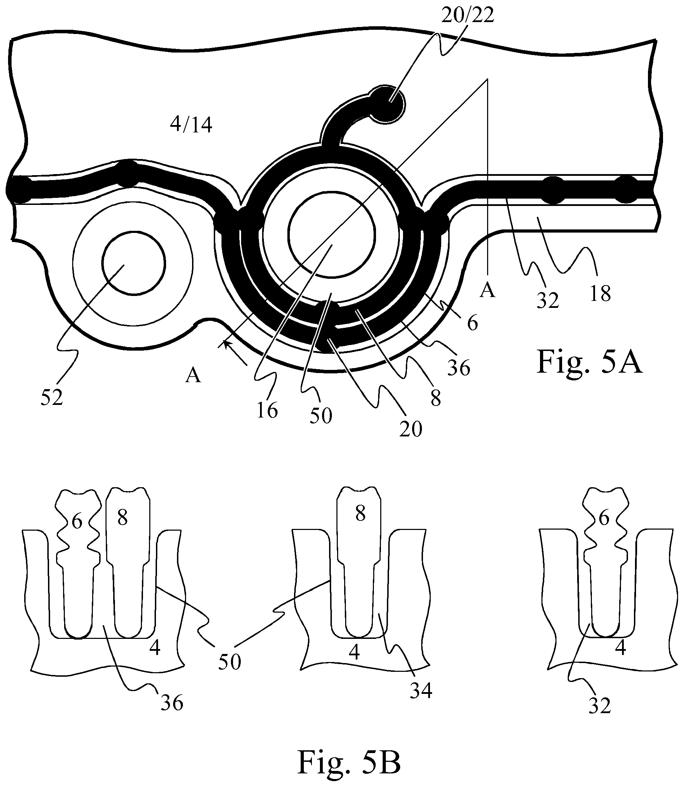

Figuren 5A und 5B stellen eine weitere Ausführung dar. In der Figur 5A sind die erste Dichtung 6 und die zweite Dichtung 8 jeweils mit Distanz- bzw. Haltenoppen versehen, um die Dichtung bzw. die Dichtlippe in der Mitte jeweils der Nut 32, 34, 36 zu halten. Durch Reibschluss ist es zudem möglich, dass die Distanz-/Haltenoppen 20 die erste Dichtung 6 wie auch die zweite Dichtung 8 in der jeweiligen Dichtnut 32, 34, 36 halten, sodass eine Verklebung wie in der Figur 4B dargestellt, eingespart werden kann.

Weiterhin ist die zweite Dichtung 6 wie auch die zweite Dichtnut 34 mit einem Poka-Yoke-Feature 22 bzw. einem Merkmal versehen, das einen nicht korrekten Einbau verhindern soll. Durch die Form der Ausstülpung des Poka-Yoke-Features 22 und des daran angeordneten Haltenoppens 20 kann eine Fehlmontage der zweiten Dichtung 8 nahezu ausgeschlossen werden. Es ist jedoch ebenfalls möglich, die Montage der zweiten Dichtung zu automatisieren oder eine rotationssymmetrische/spiegelsymmetrische Form für die zweite Dichtung zu wählen, um so eine Fehlmontage zu vermeiden. Die Figur 5B entspricht der Figur 4B.

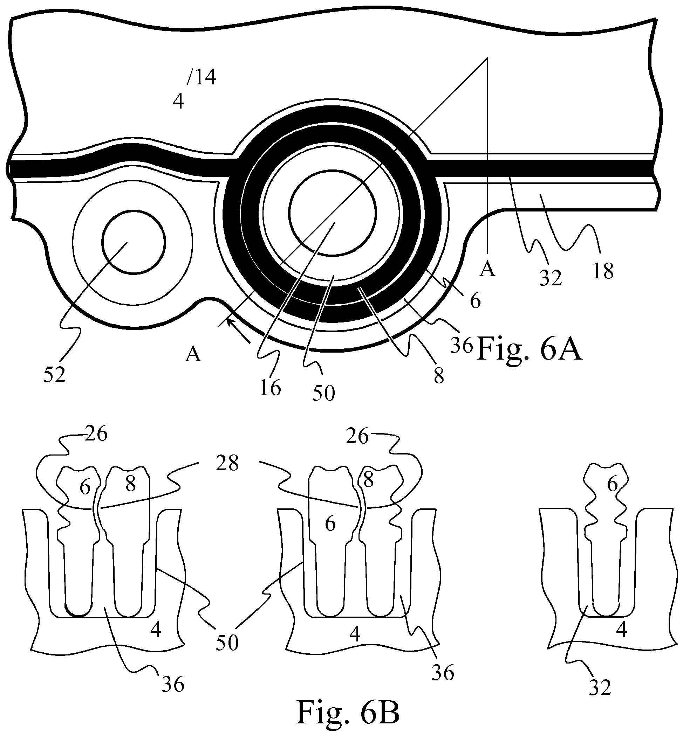

Figuren 6A und 6B zeigen eine weitere Ausführung der Dichtung der vorliegenden Erfindung dar. Die Figur 6A entspricht dabei im Wesentlichen der Figur 3A. In der Schnittansicht 6B wird der Unterschied zu der Figur 3 deutlich. Die zweite Dichtung 8 ist mit mindestens einem Vorsprung 28 versehen, der sich radial nach außen erstreckt. Die erste Dichtung 6 ist mit einer passenden Hinterschneidung 26 versehen. Die erste Dichtung 6 umgibt die zweite Dichtung, 8 vollständig. Nach der Montage steht der Vorsprung 28 mit der Hinterschneidung 26 in Eingriff, wodurch verhindert werden kann, dass sich die erste und die zweite Dichtung 6, 8 voneinander lösen können. Dieser Aufbau gestattet eine Vormontage der ersten und der zweiten Dichtung. Der Vorsprung 28 kann so ausgeführt werden, dass er ein Auswerfen der Dichtung aus einer Form nicht behindert. Die erste Dichtung aus weicherem Material kann eine Hinterschneidung aufweisen, da das weichere Material unter einer Verformung der geformten Dichtung aus einer Form gelöst werden kann. Die Abmessungen können so gewählt werden, dass die erste Dichtung 6 die zweite Dichtung 8 durch Reibschluss in der gemeinsamen Dichtnut 36 hält.

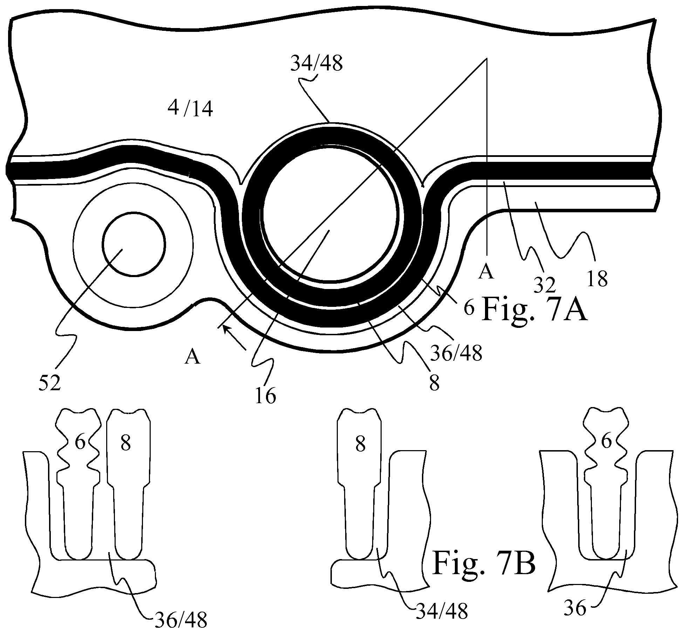

Figuren 7A bis 7B stellen eine Ausführung einer erfindungsgemäßen Dichtung und insbesondere einer erfindungsgemäßen Motorkomponente dar. Die zweite Dichtnut 34 sowie die gemeinsame Dichtnut 36 sind als Dichtnut ohne innenflanke ausgeführt. Die große Stabilität des Materials der zweiten Dichtung 8 sollte es ermöglichen bei einer geeigneten Dichtungsgeometire ganz auf die Innenflanke 50 und somit auf eine innere Begrenzung der zweiten und der gemeinsamen Dichtnut zu verzichten und die Dichtnut als innenflankenfreie Dichtnut 48 auszuführen. Dadurch kann der Bauraum der für die Innenflanke benötigt wird ebenfalls eingespart werden.

Der Schutzumfang der vorliegenden Erfindung wird durch die Ansprüche definiert. Die Figuren sind lediglich schematisch. Es ist ebenfalls vorgesehen Kombinationen von Merkmalen die in einzelnen Ausführungsformen dargestellt sind ebenfalls als offenbart zu betrachten.

### Bezugszeichenliste

- 2: Dichtung bzw. Dichtungssystem
- 4: Motorkomponente
- 6: erste Dichtung aus Ethylen-Acrylat Kautschuk oder Polyacrylat-Kautschuk (AEM)
- 6': Dichtung aus Ethylen-Acrylat Kautschuk oder Polyacrylat-Kautschuk (AEM)
- 8: eine zweite Dichtung aus Fluorkautschuck (FKM)
- 8': Dichtung aus Fluorkautschuck (FKM)
- 14: Zylinderkopfdeckel
- 16: Öffnungen für Blowbykanäle / Volllast- / Teillastabscheider
- 18: Randbereichs des Zylinderkopfdeckels
- 20: Halte- / Distanznoppen
- 22: Fehlmontageschutzmerkmal/Idiotensicherungsmerkmal
- 24: I-Dichtung ausgeführt
- 26: Hinterschneidung der ersten Dichtung
- 28: Vorsprung der zweiten Dichtung
- 32: erste Dichtnut
- 32': Dichtnut für Ethylen-Acrylat Kautschuk- oder Polyacrylat-Kautschuk-Dichtung
- 34: zweite Dichtnut
- 34': Dichtnut für Dichtung aus Fluorkautschuck (FKM)
- 36: gemeinsame Dichtnut
- 38: A-förmiger Querschnitt der ersten/zweiten Dichtung
- 40: Schulter des A-förmigen Querschnitts
- 42: Basis des A-förmigen Querschnitts
- 46: Verklebung
- 48: Dichtnut ohne innere Nutflanke
- 50: innere Nutflanke
- 52: Öffnung für ein Befestigungsmittel

## Patentansprüche

1. Motorkomponente (4), angepasst um an einem Motor dichtend angebracht zu werden, wobei die Motorkomponente (4) mit einer Dichtung (2) versehen ist, die mindestens eine erste Dichtung (6) aus Ethylen-Acrylat Kautschuk oder Polyacrylat-Kautschuk und mindestens eine zweite Dichtung (8) aus Fluorkautschuk aufweist, **dadurch gekennzeichnet, dass** die Motorkomponente (4) für die erste Dichtung (6) und die zweite Dichtung (8) jeweils eine erste Dichtnut (32) und zweite Dichtnut (34) aufweisen, wobei die erste und die zweite Dichtnut (32, 34) teilweise zusammen verlaufen und eine gemeinsame Dichtnut (36) bilden in der die erste und die zweite Dichtung (6, 8) nebeneinander verlaufen.

2. Motorkomponente (4) gemäß Anspruch 1, wobei die erste Dichtung (6) die zweite Dichtung (8) vollständig umgibt.

3. Motorkomponente (4) gemäß Anspruch 1 oder 2, wobei die erste Dichtung (6) und/oder die zweite Dichtung (8) mit der Motorkomponente (4) durch eine Verklebung (46) verklebt sind.

4. Motorkomponente (4) gemäß Anspruch 1, 2 oder 3, wobei die Dichtnut für die zweite Dichtung (8) zumindest teilweise keine, bevorzugt überhaupt keine innere Nutflanke (50) aufweist.

5. Motor mit einer Motorkomponente (4), wobei die Motorkomponente (4) gemäß Anspruch 1, 2, 3 oder 4 ausgeführt ist.

## Claims

1. An engine component (4), adapted to be sealingly attached to an engine, wherein the engine component (4) is provided with a seal (2) having at least one first seal (6) that is composed of ethylene-acrylate rubber or polyacrylate rubber and at least one second seal (8) that is composed of fluororubber, **characterized in that** the engine component (4) has a first sealing groove (32) and second sealing groove (34) for the first seal (6) and the second seal (8), respectively, the first and the second sealing groove (32, 34) extending partially together and forming a common sealing groove (36) in which the first and second seals (6, 8) run side by side.

2. The engine component (4) as set forth in claim 1, wherein the first seal (6) completely encloses the second seal (8).

3. The engine component (4) as set forth in claim 1 or 2, wherein the first seal (6) and/or the second seal (8) are glued to the engine component (4) by an adhesive bond (46).

4. The engine component (4) as set forth in claim 1, 2, or 3, wherein the sealing groove for the second seal (8) has no inner groove flank (50) at least in part, preferably none at all.

5. An engine with an engine component (4), wherein the engine component (4) is designed as set forth in claim 1, 2, 3, or 4.

## Revendications

1. Composant de moteur (4), adapté pour être monté de manière étanche sur un moteur, le composant de moteur (4) étant pourvu d'un joint d'étanchéité (2) qui comporte au moins un premier joint d'étanchéité (6) en caoutchouc éthylène-acrylate ou en caoutchouc polyacrylate et au moins un deuxième joint d'étanchéité (8) en caoutchouc fluoré, **caractérisé en ce que** les composants de moteur (4) comportent une première rainure d'étanchéité (32) et une deuxième rainure d'étanchéité (34) destinée respectivement au premier joint d'étanchéité (6) et au deuxième joint d'étanchéité (8), la première et la deuxième rainure d'étanchéité (32, 34) s'étendent en partie conjointement et forment une rainure d'étanchéité commune (36) dans laquelle le premier et le deuxième joint d'étanchéité (6, 8) s'étendent côte à côte.

2. Composant de moteur (4) selon la revendication 1, le premier joint d'étanchéité (6) entourant complètement le deuxième joint d'étanchéité (8).

3. Composant de moteur (4) selon la revendication 1 ou 2, le premier joint d'étanchéité (6) et/ou le deuxième joint d'étanchéité (8) étant collés au composant de moteur (4) par un adhésif (46).

4. Composant de moteur (4) selon la revendication 1, 2 ou 3, la rainure d'étanchéité destinée au deuxième joint d'étanchéité (8) ne comportant pas au moins en partie, de préférence d'une façon générale, de flanc de rainure intérieure (50).

5. Moteur pourvu d'un composant de moteur (4), le composant de moteur (4) étant réalisé selon la revendication 1, 2, 3 ou 4 .
